# EUROPÄISCHE PATENTANMELDUNG

(11) **EP 1 053 977 A1**
(43) Veröffentlichungstag der Anmeldung: **22.11.2000**
(21) Anmeldenummer: 00108755.0
(22) Anmeldetag: 25.04.2000
(51) Int. Cl.: C02F 3/02, C02F 3/12, C02F 9/00

(54) **Vorrichtung und Verfahren zur aeroben Abwasseraufbereitung**

(30) Priorität: 26.04.1999 DE 19918695
(71) Anmelder: Julius Schulte Söhne GmbH & Co. KG, 40223 Düsseldorf (DE)
(72) Erfinder: Pingen, Georg, 41468 Neuss (DE); Althöfer, Philipp, 50827 Köln (DE)
(74) Vertreter: Christophersen, Ruth

(57) **Zusammenfassung**

Es wird eine Vorrichtung sowie ein Verfahren zur aeroben Aufbereitung von Abwässern beansprucht. Die Vorrichtung ist gekennzeichnet durch eine Verwirbelungszone (6) mit einer in diese Zone mündenden Abwasserzuführung (2) und einer Sauerstoff-Zuführung (4) zur Verwirbelung des Abwassers und eine Klärzone (7), wobei die Zonen über einen Durchtritt (8) für das in der Verwirbelungszone behandelte Wasser miteinander verbunden sind. Durch Einsatz dieser Vorrichtung ist es möglich, den Gehalt an anorganischen und auch organischen Frachten, insbesondere CaCO₃, in einem solchen Maße zu reduzieren, daß das erhaltene Abwasser wieder dem Herstellungs- beziehungsweise Aufbereitungsprozeß zugeführt werden kann. Die Vorrichtung eignet sich insbesondere zur Aufbereitung von Abwässern aus der Papierherstellung bzw. -aufbereitung.

## Beschreibung

Die vorliegende Erfindung betrifft eine Vorrichtung zur aeroben Aufbereitung von Abwasser, insbesondere von Abwasser aus der Papierherstellung beziehungsweise -aufbereitung, die eine Verwirbelungszone mit einer in diese Zone mündenden Abwasserzuführung und einer Sauerstoff-Zuführung zur Verwirbelung des Abwassers und eine Klärzone aufweist.

Das Abwasser aus der Altpapierverarbeitung und Papierherstellung enthält große Mengen an darin gelösten oder suspendierten organischen und anorganischen Frachten. Insbesondere die organischen Frachten sind für die hohen CSB- und BSB-Werte verantwortlich. Um das Abwasser in die öffentliche Kanalisation einleiten zu können oder es dem Herstellungsverfahren wieder zuführen zu können, müssen diese Frachten unter die vom Gesetzgeber vorgegebenen Werte reduziert werden.

Üblicherweise erfolgt die Abwasseraufbereitung zunächst über ein anaerobes Verfahren, worin unter Einsatz von anaeroben Mikroorganismen die organischen Stoffe unter Bildung von Biomasse abgebaut werden. Die Reduzierung der organischen Frachten in diesem Verfahrensschritt kann bis zu 80 % des CSB betragen.

Anschließend wird das Abwasser üblicherweise einer aeroben Klärung unterworfen. Die aerobe Klärung kann eine einfache Belüftung mit Luft beziehungsweise Sauerstoff sein. Häufig wird auch das aus dem Stand der Technik bekannte Kontaktschlammverfahren bzw. Belebtschlammverfahren eingesetzt, worin das aus der anaeroben Klärung stammende Wasser in einem Behälter beziehungsweise Reaktor mit Biomasse versetzt wird, welche aerobe oder fakultativ aerobe Mikroorganismen enthält. Es erfolgt ein weiterer Abbau der organischen Frachten, der bis zu 60 % betragen kann.

Das aus der aeroben Klärung stammende Abwasser hat in der Regel eine solche Reinheit, daß es in das öffentliche Abwassersystem geleitet werden kann. Die Wasserqualität ist jedoch nicht in jeder Hinsicht ausreichend, um das aufbereitete Wasser dem Prozeß wieder zuführen zu können. Dies ist jedoch bei der Einengung bzw. Schließung von Wasserkreisläufen erwünscht.

Aus dem Stand der Technik sind auch Verfahren bekannt, worin das aus der anaeroben Behandlung kommende Wasser mit Biomasse versetzt wird, welche aus der aeroben Klärung stammt. Diese Biomasse enthält u.a. aerobe Bakterien, die den CSB-Abbau des neu zugeführten Abwassers aus der anseroben Verfahrensstufe beschleunigen soll. Ferner unterstützt die zurückgeführte Biomasse, die dann ein relativ hohes Schlammalter aufweist, das Ausfällen von in der aeroben Klärung gebildeten Schlamms und organischer Salze, wie CaCO₃, als Kristallisationskeim. Es hat sich jedoch gezeigt, daß der Gehalt an anorganischen Stoffen insbesondere an Carbonaten, nicht ausreichend reduziert werden kann. Die Carbonate, die in der aus der aeroben Klärung stammenden Biomasse enthalten sind, können sich bei der Zufuhr von neuem Abwasser aus der anaeroben Klärung zumindest teilweise wieder auflösen und im System verbleiben, was dazu führt, daß insbesondere der Ca-Gehalt im aufbereiteten Abwasser zu hoch ist, um dieses dem Herstellungs- beziehungsweise Aufbereitungsverfahren für Papier in allen Prozeßstufen wieder zuführen zu können.

Ferner ist bekannt, daß in den Fällen, in denen das aufbereitete Wasser dem Prozeßwasser wieder zugeführt wurde, es in der Anlage beziehungsweise bei der Wasseraufbereitung zu Verschlammungen oder Ablagerungen kommt, die zu einer Unterbrechung des Herstellungsverfahrens führen können.

Insgesamt ist ein wesentlicher Nachteil der bekannten Verfahren, daß das erhaltene aufbereitete Abwasser einen hohen Gehalt an Calcium- und Carbonat- bzw. Hydrogencarbonationen aufweist, was zu einer Verkalkung der Produktionsanlagen führen kann. Die Kalkablagerungen treten in Anlagen, in denen das Wasser im Kreis geführt wird, insbesondere an den Zonen auf, an denen ein Vakuum auftritt. Beispielsweise verwenden Vakuumpumpen Wasser als Dichtmittel, die bei Einsatz von kalkhaltigem Wasser bereits nach relativ kurzer Zeit blockieren und es zu einer Verfahrensunterbrechnung kommen kann. In den aus dem Stand der Technik bekannte Anlagen ist nur eine begrenzte beziehungsweise keine Rückführung dieses Wassers in das Herstellungsverfahren erlaubt, ohne daß das Risiko von Verfahrensunterbrechungen in Kauf genommen werden muß.

Der vorliegenden Erfindung lag demgemäß die Aufgabe zugrunde, eine Vorrichtung zur Verfügung zu stellen, die die Aufbereitung von Abwässern, insbesondere gewerblichen Abwässern, die eine hohen Anteil an Substanzen enthalten, welche durch Fällungsreaktionen entfernt werden sollen, bis zu einer solchen Reinheitsstufe ermöglicht, daß dieses Wasser dem Herstellungs- beziehungsweise Aufbereitungsprozeß wieder zugeführt werden kann, d.h. daß der Wasserkreislauf geschlossen werden kann. Die Vorrichtung sollte insbesondere zur Aufbereitung von Abwässern aus der Papierherstellung beziehungsweise -aufbereitung geeignet sein.

Überraschenderweise wurde festgestellt, daß in einer Vorrichtung zur aeroben Aufbereitung von Abwasser durch gezielte Aufteilung einer Anlage zur seroben Abwasseraufbereitung in eine Verwirbelungszone und in eine Klärzone der Gehalt an anorganischen und auch organischen Frachten, insbesondere schwerlösliche anorganische Salze, wie Erdalkalicarbonate und -sulfate, in einem solchen Maße reduziert werden kann, daß das erhaltene Abwasser wieder dem Herstellungs- beziehungsweise Aufbereitungsprozeß zugeführt werden kann. Vielfach kann auch der Gehalt an Chloridionen stark vermindert werden.

Gegenstand der vorliegenden Erfindung ist demgemäß eine Vorrichtung zur aeroben Aufbereitung von Abwässern gekennzeichnet durch eine Verwirbelungszone mit einer in diese Zone mündenden Abwasserzuführung und einer Sauerstoff-Zuführung zur Verwirbelung des Abwassers und eine Klärzone, wobei die Zonen über einen Durchtritt für das in der Verwirbelungszone behandelte Wasser miteinander verbunden sind.

Die erfindungsgemäße Vorrichtung ist besonders für Abwässer geeignet, die aus der Papierherstellung bzw. -aufbereitung stammen. Die Abwässer können vor oder nach der Aufbereitung in der erfindungsgemäßen Vorrichtung einer anaeroben oder einer weiteren aeroben Behandlung unterzogen werden. Ferner ist es möglich, auch mehrere der erfindungsgemäßen Vorrichtungen einzusetzen, wobei diese dann in Reihe oder parallel angeordnet sein können.

In der erfindungsgemäßen Vorrichtung wird das Abwasser in die Verwirbelungszone eingeleitet und mit Sauerstoff oder einem Sauerstoff-haltigen Gas verwirbelt. Die Verwirbelung mit Sauerstoff erfolgt vorzugsweise im Gegenstrom, indem das Abwasser von oben in die Verwirbelungszone und Sauerstoff bzw. das Sauerstoff -haltige Gas von unten zugeführt werden.

Die im Abwasser vorhandenen aeroben bzw. fakultativ aeroben Mikroorganismen setzen sich unter Verbrauch von Sauerstoff zu Biomasse und CO₂ um. Während der Verwirbelung bilden sich schwerlösliche Erdalkalicarbonate und -sulfate, die als Niederschlag ausfallen, gleichzeitig fallen auch kolloidal gelöste oder suspendierte organische Bestandteile aus.

Die Verwirbelungszone kann aus einem üblichen Reaktor bestehen, worin Wasser mit Sauerstoff behandelt, d.h. verwirbelt werden kann. Da das Abwasser zu Schaumbildung neigen kann, kann das obere Ende des Reaktors einen größeren Durchmesser haben als das untere, um das Überschäumen zu vermeiden. Die Höhe des Reaktors sollte so bemessen sein, daß das aufzubereitende Abwasser über einen Zeitraum, der ausreichend ist, um die Fällungsreaktion zu bewirken, im Reaktor verbleibt und mit dem sauerstoffhaltigen Gas in Kontakt ist.

Im Anschluß an die Verwirbelung tritt das Abwasser in die Ruhezone ein. Erfindungsgemäß sind die beiden Zonen über einen geeigneten Durchtritt miteinander verbunden. In der Ruhezone (Klärzone) trennen sich die absetzbaren Stoffe (Schlamm) durch Sedimentation und das behandelte Wasser und werden dort abgezogen. Das Abtrennen der Feststoffe und des Klarwassers kann in an sich bekannter Weise erfolgen.

Die Ruhezone kann ebenfalls eine auf dem Abwassersektor bekannte Absetzanlage sein, worin gebildeter Schlamm vom Klarwasser getrennt werden kann, z. B. ein Dortmundbrunnen. Der Schlammabzug befindet sich bevorzugt im Reaktorboden.

Das Sauerstoff-haltige Gas kann entweder reiner Sauerstoff sein oder Luft oder ein anderes Gasgemisch, das Sauerstoff enthält.

Die Verweilzeit des Abwassers in der Vorrichtung sollte so eingestellt werden, daß eine ausreichende Ausfällung der organischen und anorganischen Frachten erreicht wird. Das Ausfällen der schwerlöslichen anorganischen Verbindungen erfolgt unmittelbar nach dem Einleiten des sauerstoffhaltigen Gases, so daß die Verweilzeiten kurz sein können. In einer bevorzugten Ausführungsform der vorliegenden Erfindung wird die Fällungsrekation gleichzeitig mit einer aeroben Reinigung durchgeführt, so daß die Verweilzeit an die Aktivität der in der Biomasse enthaltenden Mikroorganismen angepaßt werden sollte. In dieser Ausführungsform beträgt die Verweilzeit vorzugsweise zwischen 3 und 10 Stunden. Es hat sich herausgestellt, daß eine Verweilzeit unter 3 Stunden in vielen Fällen zu keiner ausreichenden biologischen Abwasserreinigung führt. Verweilzeiten über 10 Stunden führen nicht zu einer entsprechenden Verbesserung der Wasserqualität.

Der abgezogene Schlamm besteht zu einem hohen Prozentsatz aus anorganischen Komponenten sowie zu einem geringen Anteil aus organischem Material.

Das Klarwasser und auch der gebildete Schlamm können kontinuierlich oder batchweise aus dem Reaktor abgezogen werden.

In einer bevorzugten Ausführungsform der vorliegenden Vorrichtung werden die Verwirbelungszone und die Klärzone gemeinsam einen sich in erster Linie vertikal erstreckenden aus der Verwirbelungszone im oberen und der Klärzone im unteren Teil bestehenden Reaktor realisiert. In dieser Ausführungsform sind die beiden Zonen über geeignete Mittel voneinander getrennt. Die Mittel zur Trennung der beiden Zonen sind im Reaktor angeordnet, daß zwischen diesen Mitteln und der Reaktorwandung ein Durchtritt für das Wasser vorhanden ist, wobei auch die Mittel entsprechende Durchtrittsmöglichkeiten aufweisen können, so daß verwirbeltes Wasser in die Ruhezone eintreten kann.

Die Mittel zur Trennung von Verwirbelungszone und Ruhezone können z. B. in Form eines Trennbodens vorliegen, wobei der Trennboden einen solchen Abstand zur Reaktorwandung hat, daß das Wasser in die Ruhezone eintreten kann. Der Trennboden kann auch aus Form mehrere separaten Böden bestehen, so daß das Wasser auch durch die zwischen den einzelnen Böden durchtreten kann. In einer weiteren möglichen Ausgestaltung liegen die Mittel zur Trennung der beiden Zonen in Form von einer oder mehreren nach unten offenen Kammern vor, wie Halbkugeln, Kegeln, zylindrischen Hohlkörpern und beliebigen anderen nach unten offenen Hohlkörpern. Durch die Verwendung von nach unten offenen Kammern (auch Hauben genannt) kann eine besonders wirksame Beruhigung des Wassers wird werden.

Um eine optimale Verwirbelung des aufzubereitenden Wassers zu erreichen, ist die Sauerstoffzuführung vorzugsweise unmittelbar über den Mitteln zur Trennung von Verwirbelungs- und Ruhezone angeordnet.

In einer möglichen Ausgestaltung werden Schlamm und Klarwasser getrennt über dafür vorgesehene Einrichtungen abgezogen. Der Schlammabzug ist in dieser Ausgestaltung am Reaktorboden angeordnet. Um nur Klarwasser ohne bzw. mit möglichst geringen Schlammanteilen abziehen zu können befindet sich der Klarwasserabzug unmittelbar unter dem Trennboden.

Der in dieser bevorzugten Ausgestaltung der vorliegenden Erfindung enthaltene Reaktor kann ein üblicher Reaktor zur Abwasseraufbereitung sein. Das aufzubereitende Abwasser wird erfindungsgemäß im oberen Teil des Reaktors zugeführt und die Zuführung von Luft beziehungsweise Sauerstoff erfolgt im unteren Teil, wodurch eine Behandlung des Wassers im Gegenstrom erfolgt.

Die Zuführung des Sauerstoff-haltigen Gases erfolgt über eine übliche Gaszuleitung im unteren Teil des Reaktors. Eine besonders gleichmäßige Verteilung der Gasblasen im aufzubereitenden Wasser wird dadurch erhalten, in dem das sauerstoffhaltige Gas durch ein Belüftungselement geleitet wird. Das Belüftungselement weist vorzugsweise eine Vielzahl von für das Gas durchlässige Öffnungen auf.

Das Belüftungselement kann als Teil der Mittel zur Trennung von Verwirbelungszone und Ruhezone oder als unabhängiges Bauteil augestaltet sein. Um einen guten Kontakt zwischen dem zu reinigenden Wasser und dem sauerstoffhaltigen Gas zu erreichen, ist das Belüftungselement vorzugsweise in gleicher Höhe oder etwas über den Mitteln zur Trennung von Verwirbelungszone und Ruhezone angeordnet. Dieses Element weist vorzugsweise eine Vielzahl von Öffnungen auf, wodurch sich kleine Gasblasen bilden, die eine große Kontaktoberfläche zwischen dem sauerstoffhaltigen Gas und dem aufzuarbeitenden Wasser ermöglichen. Dadurch wird eine gute Reaktion beziehungsweise Aktivität der Mikroorganismen und gute Ausnutzung des zugeführten Sauerstoffs erreicht. Ein weiterer Vorteil ist, daß in dem aufzubereitenden Wasser ein sogenanntes Sprudeln auftritt, wodurch gleichzeitig (CO₂) ausgetrieben wird. Dadurch wird der pH-Wert des zugeführten Wassers, der bei der Zuführung des Wassers in den Reaktor etwa bei 6,5 und darüber liegt auf ein pH-Wert zwischen 7 und 9 erhöht, was die Fällung der schwerlöslichen Verbindungen ermöglicht.

Sind die Verwirbelungszone und Ruhezone in einem Bauteil zusammengefaßt, so ist dieses Bauteil vorzugsweise als ein sich in erster Linie vertikal erstreckender Reaktor realisiert. In einem derartigen Reaktor sinkt das mit Sauerstoff verwirbelte beziehungsweise behandelte Wasser im Laufe der Verfahrensführung in die untere Ruhezone, d.h. der Klärzone, ab. Die Klärzone ist in einer solchen Ausführungsform durch die unterhalb der Luftzuführung angeordneten Mittel zur Trennung von Verwirbelungszone und Ruhezone von der Verwirbelungszone abgetrennt. Diese Mittel sind derart im Reaktor angeordnet, daß zwischen den Reaktorwänden und der Haube noch ausreichend Raum ist, daß das Wasser beziehungsweise gebildete Feststoffe nach unten sinken können. Auf der anderen Seite sollten die Mittel insgesamt im Reaktorquerschnitt eine solche Größe aufweisen, daß sich im genannten unteren Bereich eine Klärzone mit relativer Ruhe ausbilden kann. Das bedeutet, das nach unten abgesunkene Wasser sollte nicht weiter aufgewirbelt werden. In dieser relativen Ruhezone fallen die gebildeten Feststoffe, Sediment und ausgefällte anorganische Salze, insbesondere Erdalkalicarbonate und -sulfate, aus und sinken als Feststoff nach unten, während sich darüber Klarwasser bildet, das sich direkt unterhalb der Haube sammelt. Das gebildete Klarwasser kann über einen Klarwasserabzug aus dem Reaktor abgezogen werden. Die ausgefallenen Feststoffe werden in Form von Schlamm über einen Schlammabzug im unteren Reaktorteil ebenfalls aus dem Reaktor entfernt.

Ein weiterer Gegenstand der vorliegenden Erfindung ist ein Verfahren zur Aufbereitung von Abwasser aus der Papierherstellung beziehungsweise -aufbereitung, worin das Abwasser in einer Verwirbelungszone im Gegenstrom mit Sauerstoff beziehungsweise einem sauerstoffhaltigen Gas behandelt wird, das mit Luft beziehungsweise Sauerstoff behandelte Wasser in eine Ruhezone geleitet wird, wo sich gebildeter Schlamm vom Wasser trennt und das geklärte Wasser sowie der Schlamm aus dem Reaktor abgezogen werden.

Das erfindungsgemäße Verfahren sollte vorzugsweise bei für die eingesetzten Mikroorganismen optimalen Temperaturen durchgeführt werden, wobei ein Temperaturbereich zwischen 20 und 60°C besonders bevorzugt ist. Werden mesophile Mikroorganismen eingesetzt, liegt die Verfahrenstemperatur vorzugsweise zwischen 35 und 45°C und zwischen 45 und 60°C, wenn thermophile Mikroorganismen zum Einsatz kommen.

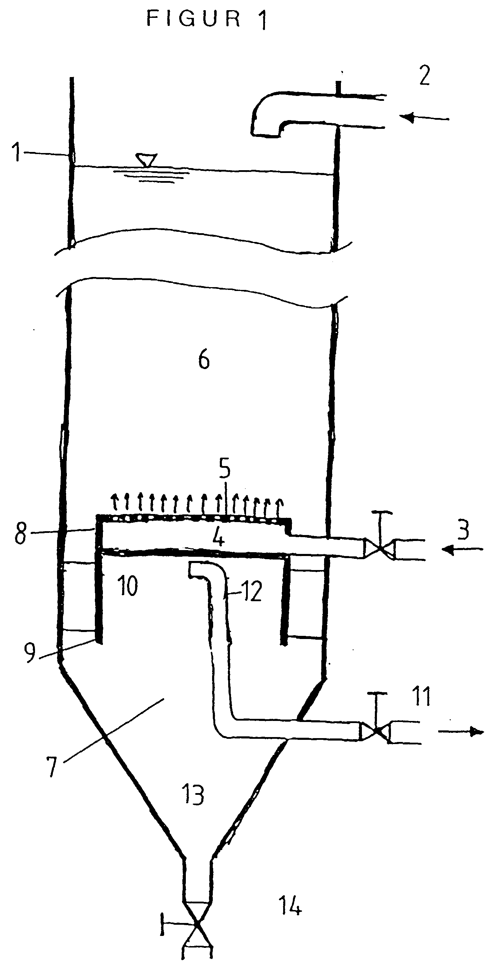

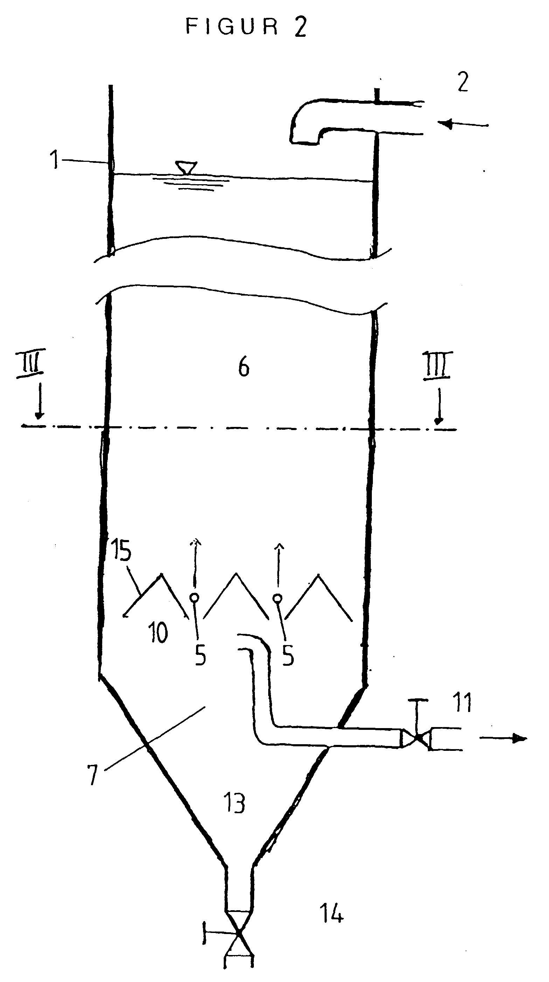

Die erfindungsgemäße Vorrichtung und das Verfahren werden anhand der beigefügten Figuren 1 und 2 näher erläutert.

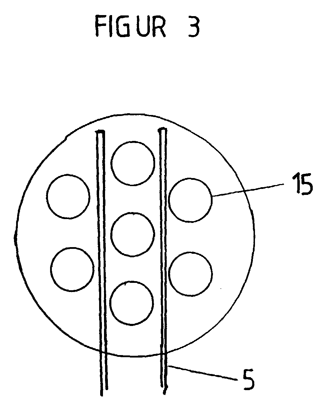

Es zeigen Fig. 1 und Fig. 2 mögliche Ausführungsformen der erfindungsgemäßen Vorrichtung und Fig. 3 einen Querschnitt entlang der Ebene III der Vorrichtung aus Fig. 2.

Das aufzubereitende Abwasser wird in den Reaktor 1 über eine Abwasserzuführung 2 geleitet. Das Abwasser kann entweder direkt aus dem Herstellungsprozeß stammen, bevorzugt sollte das Abwasser jedoch bereits einer anaeroben Aufbereitung unterzogen worden sein. Das Abwasser wird im Gegenstrom mit Sauerstoff beziehungsweise einem sauerstoffhaltigen Gas, vorzugsweise Luft, behandelt. Das Gas wird über eine Gaszuführung 3 in den Verteiler 4 geleitet und tritt durch die Öffnungen des Belüftungselements 5 in die Verwirbelungszone 6 ein. Durch das Belüftungselement 5 tritt das Gas in fein verteilter Form in die Verwirbelungszone 6 ein, wodurch eine große Kontaktoberfläche zwischen dem zu behandelnden Wasser und dem Gas entsteht.

Das Abwasser enthält in der vorhandenen Biomasse aerob beziehungsweise fakultativ aerob arbeitende Mikroorganismen, die unter Einsatz von Sauerstoff die vorhandene Biomasse weiter abbauen. Dadurch bilden sich feine Schlammpartikelchen, die zunächst im Wasser suspendiert sind. Gleichzeitig mit der Sauerstoffbehandlung wird sich bildendes CO₂ ausgetrieben, was eine Erhöhung des pH-Wertes bewirkt. Es wurde beobachtet, daß in dieser Verfahrensstufe zwei Wirkungen gleichzeitig auftreten, zum einen bilden sich kleine Schlammpartikelchen, die als Kristallisationskeime für auszufällende anorganische Salze dienen können, zum anderen wird der pH-Wert derart erhöht, daß das Löslichkeitsprodukt der auszufällenden Salze überschritten wird. Die ausgefällten Feststoffe binden suspendierten Schlamm, wodurch sich das spezifische Gewicht dieser gebildeten Feststoffe derart erhöht, daß sie nach unten sinken und sich in der Klärzone 7 sammeln. Die Klärzone 7 wird durch die Haube 8 von der Verwirbelungszone abgetrennt.

In der hier dargestellten Ausführungsform bildet der Trennboden 8 zusammen mit vertikalen Wandabschnitten 9 eine Haube, die mittig in Bezug auf die vertikale Längsachse des Reaktors angeordnet ist. Unterhalb des Trennbodens 8 in der Klärzone 7 wird das mit Sauerstoff angereicherte bzw. behandelte Abwasser keinen wesentlichen Turbulenzen ausgesetzt, sich also in relativer Ruhe befindet, so daß sich die Feststoffe und das Wasser trennen können. Unterhalb des Trennbodens bzw. der Haube bildet sich im oberen Bereich der Klärzone 7 eine Klarwasserkammer 10. Das gebildete Klarwasser wird vorzugsweise durch den Klarwasserabzug 11 über den Stutzen 12, der in den oberen Teil der Klarwasserkammer 10 ragt, abgezogen.

Die gefällten Feststoffe, sammeln sich in der Sedimentzone 13 und können kontinuierlich oder nach Bedarf auch stufenweise über den Schlammabzug 14 abgezogen werden. Über den Schlammabzug 14 kann auch, nach Abzug des Schlamms, das Klarwasser abgezogen werden. Es besteht jedoch die Gefahr, daß es mit noch vorhandenen Schlammresten verunreinigt wird.

Die Klärzone 7 ist in der in der Figur dargestellten Ausführungsform als Trichterauslauf gebaut. Der Trichter ermöglicht besonders gute Sedimentations- und Absetzbedingungen für den Schlamm, hinzukommt, daß über den schmalen Trichterablauf der Schlamm besonders exakt vom Klarwasser getrennt werden kann.

In der in Figur 2 dargestellten Ausführungsform sind die Mittel zur Trennung von Verwirbelungs- und Ruhezone 6, 7 in Form von nach unten offenen Kammern 15 ausgestaltet. Das Belüftungselement 5 befindet sich in Form von mehreren Rohren zwischen den Kegelspitzen, so daß eine gute Verteilung des Sauerstoffs über den Reaktorquerschnitt ermöglicht werden kann. Fig. 3 zeigt einen ein Querschnitt durch die Ebene III der in Fig. 2 dargestellten Ausführungsform, worin der Verteiler 4 in Form von mehreren Rohren zwischen den Kammern 15 angeordnet ist. Die in Figur 2 dargestellte Ausgestaltung der Mittel zur Trennung von Verwirbelungs- und Ruhezone hat den Vorteil, daß das Wasser insbesondere in den Bereichen in den Kegeln bzw. unterhalb der Kegelöffnungen sich in relativer Ruhe befindet und die Trennung von Feststoff und Klarwasser wirksam erfolgen kann.

Das erfindungsgemäße Verfahren hat den Vorteil, daß der gebildete Schlamm nahezu vollständig aus dem Verfahren entfernt werden kann. In Abhängigkeit von der Aktivität der vorhandenen Biomasse, kann auch gealterter Schlamm zugesetzt werden, um die Umsetzung der Biomasse und das Ausfällen der Feststoffe zu beschleunigen, wobei bei ausreichender Aktivität der Biomasse auch auf eine solchen Zusatz verzichtet werden kann. Durch das erfindungsgemäße Verfahren ist es möglich, den Gehalt an anorganischen und organischen Frachten in Abwässern aus Verfahren, die einen hohen Anteil an auszufällenden Substanzen enthalten, weiter zu vermindern und die Wasserhärte, d.h. den Calciumgehalt, auf einen Wert unter 20 ° dH zu senken. Das Verfahren ist besonders bei der Papierherstellung und - aufbereitung geeignet. Das erhaltene Klarwasser hat eine solche Qualität, daß es als Prozeßwasser bei der Papierherstellung beziehungsweise -aufbereitung eingesetzt werden kann, d.h. das Verfahren kann mit einem geschlossenen Wasserkreislauf geführt werden, wodurch sich die Verfahrenskosten durch verminderte Frischwasserzufuhr und verminderte Abwasserausleitung reduziert werden können.

### Bezugszeichenliste:

- 1: Reaktor
- 2: Abwasserzuführung
- 3: Gaszuführung
- 4: Verteiler
- 5: Belüftungselement
- 6: Verwirbelungszone
- 7: Klärzone
- 8: Trennboden
- 9: vertikaler Wandabschnitt des Trennbodens
- 10: Klarwasserkammer
- 11: Klarwasserabzug
- 12: Stutzen für Klarwasserabzug
- 13: Sedimentzone
- 14: Schlammabzug
- 15: nach unten offene Kammer

## Patentansprüche

1. Vorrichtung zur aeroben Aufbereitung von Abwasser **gekennzeichnet durch** eine Verwirbelungszone mit einer in diese Zone mündenden Abwasserzuführung und einer Sauerstoff-Zuführung zur Verwirbelung des Abwassers und eine Klärzone, wobei die Zonen über einen Durchtritt für das in der Verwirbelungszone behandelte Wasser miteinander verbunden sind und in der Klärzone sich Klarwasser und Feststoffe voneinander trennen und separat abgezogen werden.

2. Vorrichtung nach Anspruch 1, **dadurch gekennzeichnet, daß** die Verwirbelungszone und die Klärzone gemeinsam einen sich in erster Linie vertikal erstreckenden aus der Verwirbelungszone im oberen und der Klärzone im unteren Teil bestehenden Reaktor bilden, wobei die beiden Zonen über geeignete Mittel voneinander getrennt sind.

3. Vorrichtung nach Anspruch 2, **dadurch gekennzeichnet, daß** der Trennboden entlang der Durchtrittsöffnung in einen vertikalen Wandabschnitt übergeht, dessen unterer Rand in die Klärzone ragt.

4. Vorrichtung nach Anspruch 3, **dadurch gekennzeichnet, daß** der Trennboden zusammen mit dem vertikalen Wandabschnitt eine mittig in Bezug auf die vertikale Längsachse des Reaktorgehäuses angeordnete Haube bildet, wobei sich die Durchströmöffnung zwischen der Haube und der Innenwandung des Reaktorgehäuses befindet.

5. Vorrichtung nach Anspruch 1 oder 2, **dadurch gekennzeichnet, daß** die Mittel zur Trennung von Verwirbelungszone und Ruhezone in Form eines oder mehrerer Trennböden oder nach unten offener Kammern vorliegen.

6. Vorrichtung nach einem der Ansprüche 2 bis 5, **dadurch gekennzeichnet, daß** sich ein Klarwasserabzug unmittelbar unterhalb der Mittel zur Trennung von Verwirbelungszone und Ruhezone befindet.

7. Vorrichtung nach einem der Ansprüche 1 bis 7, **dadurch gekennzeichnet, daß** der Sauerstoff bzw. das sauerstoffhaltige Gas über ein Belüftungselement in der Verwirbelungezone verteilt wird.

8. Verfahren zur Aufbereitung von Abwasser, worin das Abwasser von oben in einen Reaktor eingeleitet und im Gegenstrom mit Sauerstoff oder einem sauerstoffhaltigen Gas behandelt wird, das mit Sauerstoff beziehungsweise dem sauerstoffhaltigen Gas behandelte Wasser sich in einer im unteren Teil des Reaktors vorhandenen Klärzone sammelt und der gebildete Schlamm beziehungsweise das geklärte Wasser abgezogen werden.

9. Verfahren nach Anspruch 8 **dadurch gekennzeichnet, daß** ausfällbare organische und anorganische Substanzen, insbesondere von Erdalkaliverbindungen, aus Abwässern entfernt werden.

10. Verfahren nach Anspruch 8 oder 9, **dadurch gekennzeichnet, daß** Abwässer aus der Papierherstellung beziehungsweise -aufbereitung aufbereitet werden.
